# EUROPÄISCHE PATENTSCHRIFT

(11) **EP 2 572 565 B1**
(45) Veröffentlichungstag und Bekanntmachung des Hinweises auf die Patenterteilung: **23.09.2015**
(21) Anmeldenummer: 12005591.8
(22) Anmeldetag: 01.08.2012
(51) Int. Cl.: A01C 17/00

(54) **Zweischeibendüngerstreuer**
Two disc fertilizer spreader
Distributeur d'angrais à double disque

(30) Priorität: 26.09.2011 DE 102011114258
(43) Veröffentlichungstag der Anmeldung: 27.03.2013
(73) Patentinhaber: RAUCH Landmaschinenfabrik GmbH, 76547 Sinzheim (DE)
(72) Erfinder: Stöcklin, Volker, M.Sc., 77975 Ringsheim (DE); Zeitvogel, Thomas, 77836 Rheinmünster (DE)
(74) Vertreter: Lasch, Hartmut

(56) Entgegenhaltungen:
- EP-A1- 0 963 690
- EP-A2- 0 945 548
- EP-A2- 1 008 288
- DE-A1- 4 417 549
- DE-A1- 10 237 539
- DE-A1- 19 825 917
- DE-A1- 19 908 141

## Beschreibung

Die Erfindung betrifft einen Zweischeibendüngerstreuer mit einem mechanischen, hydraulischen oder elektrischen Antriebsstrang für den Antrieb der Verteilerscheiben, wenigstens einem Mittel zum Einstellen des Streuers auf verschiedene Arbeitsbreiten und Streugüter und/oder Verteilarten und einem einstellbaren Dosierorgan für jede Verteilerscheibe, das von einem rechnergesteuerten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom regelbar ist, wobei das Leerlaufdrehmoment des Antriebsstrangs bei geschlossenen Dosierschiebern und unbelasteter Verteilerscheibe und das Gesamtdrehmoment bei Belastung der Verteilerscheibe mit dem Sollmassenstrom gemessen und zur Bestimmung des durch den Düngermassenstrom bewirkten Drehmoments das Leerlaufdrehmoment vom Gesamtdrehmoment abgezogen wird, wobei ein typischer Wert für das Leerlaufdrehmoment bei einer Normdrehzahl für jeden zur Verteilung eingesetzten und in den Rechner eingegebenen Verteilerscheibentyp im Rechner hinterlegt ist.

Die Funktion eines Zweischeibendüngerstreuers lässt sich im Wesentlichen in die Dosierung des Düngermassenstroms auf die jeweilige Verteilerscheibe und die Verteilung des Düngers durch die Verteilerscheiben aufteilen. Damit kommt der Messung des Düngermassenstroms eine große Bedeutung zu.

Für die Düngerdosierung hat sich zur Messung und Regelung des Düngermassenstroms die Drehmomentenmesstechnik eingeführt. Dieses System hat sich bisher sehr erfolgreich bei hydraulisch angetriebenen Zweischeibendüngerstreuern im Markt bewährt (Prospekt RAUCH-AXERA-H EMC). Neben dem hydraulischen Antrieb werden künftig auch mechanische und elektrische Antriebe an Bedeutung gewinnen, die mittels der Drehmomentenmesstechnik den Düngermassenstrom messen und regeln.

In der EP 0 963 690 B1 (und vorangemeldeten DE 10 2011 018 490.2), von welcher der Anspruch 1 des vorliegenden Patentes in seinem Oberbegriff ausgeht, sind mehrere Vorschläge für eine mechanische, hydraulische und elektrische Drehmomentenmessung bei Zweischeibendüngerstreuern zur Ermittlung des Düngermassenstroms pro Verteilerscheibe unterbreitet, wobei unter anderem auch das Leerlaufdrehmoment sensorisch erfasst wird und in dem Bordrechner eine Leerlauf-Kennlinie des Drehmomentes für den Massenstrom null hinterlegt ist. Bei einer Unterbrechung des Massenstroms an Streugut wird aus der aktuellen Ausgangsgröße des Drehmomentsensors und der Ist-Drehzahl die aktuelle Leerlauflast bestimmt, um die entsprechende, hinterlegte Kennlinie zu korrigieren bzw. zu "überschreiben", so dass das hinterlegte Leerlaufdrehmoment stets auf dem aktuell geltenden Wert gehalten wird.

Das grundsätzliche Funktionsprinzip der Drehmomentenmessung lässt sich folglich in die Messung des Leerlaufdrehmoments bei unbeaufschlagter Last durch den Düngermassenstrom und des Gesamtdrehmoments bei beaufschlagter Last durch den Düngermassenstrom aufteilen. Zur Ermittlung des durch den Düngermassenstrom bewirkten Drehmoments muss vom Gesamtdrehmoment während der Streuarbeit das vorher bei geschlossenem Dosierschieber (= kein Düngermassenstrom) ermittelte Leerlaufdrehmoment abgezogen werden.

Da das Gesamtdrehmoment bei sehr kleinen Düngermassenströmen (kleine Dosiermenge, z.B. 80 kg/ha, kleine Arbeitsbreite, z.B. 12 m, geringe Fahrgeschwindigkeit, z.B. 8 km/h) nur geringfügig von dem Leerlaufdrehmoment der unbeaufschlagten Last auf die Verteilerscheibe abweicht, ist die präzise Erfassung des momentanen Leerlaufdrehmoments eine wichtige Voraussetzung für die Präzision des Gesamtsystems. In der Praxis hat sich gezeigt, dass es hierbei immer wieder zu Störungen kommt. Untersuchungen haben ergeben, dass aufgrund von Veränderungen des Widerstandes im Antriebsstrang (Ölviskosität, Kugellagerreibwiderstand, Eigenspannungsveränderungen, etc.) sich das Leerlaufdrehmoment während der Streuarbeit verändert und dies zu einer Fehlmessung des Gesamtdrehmoments und dadurch zu Fehldosierungen führt. Dies kann vermieden werden, indem in kurzen Zeitabschnitten wiederholt Leerlaufdrehmoment-Messungen während der Streuarbeit durchgeführt werden. Dies ist allerdings außerordentlich umständlich und unerwünscht, da die Streuarbeit jedes Mal unterbrochen werden muss, die Dosierschieber geschlossen werden müssen und in der Regel auch mit der Traktor-/Düngerstreuerkombination angehalten werden muss. Es ist Aufgabe der Erfindung, die Präzision des Massenstromregelsystems für Düngerstreuer durch eine präzise Erfassung des Leerlaufdrehmoments zu erhöhen, ohne die Streuarbeit unnötigerweise unterbrechen zu müssen.

Diese Aufgabe wird gemäß der Erfindung bei einem Zweischeibendüngerstreuer der eingangs genannten Art dadurch gelöst, dass bei der Erfassung des aktuellen Leerlaufdrehmoments und dem Einschalten des Antriebs der Verteilerscheiben ein Vergleich mit dem hinterlegten Leerlaufdrehmoment bei vergleichbarer Verteilerscheibendrehzahl des eingesetzten Verteilerscheibentyps durchgeführt wird, wobei
- bei einer großen Differenz des gemessenen Wertes des Leerlaufdrehmoments und dem typischen Wert des Leerlaufdrehmoments der eingesetzten Verteilerscheibe in kurzem Zeitabstand später, und
- bei einer kleinen Differenz zwischen dem gemessenen Leerlaufdrehmoment und dem typischen Leerlaufdrehmoment der eingesetzten Verteilerscheibe in einem großen Zeitabstand später
zu einer erneuten Leerlaufdrehmomentmessung aufgefordert wird.

Das typische Leerlaufdrehmoment wird bei vorgegebener Drehzahl für jeden Verteilerscheibentyp werkseitig aufgenommen und im Rechner hinterlegt. Die Messung kann bei einem mechanischen Antrieb durch den Torsionswinkel einer Welle, bei einem elektrischen Antrieb durch die Stromaufnahme des Elektromotors und bei einem hydraulischen Antrieb durch den Druckabfall erfolgen. Die Erfindung zeichnet sich dadurch aus, dass bei der Erfassung des aktuellen Leerlaufdrehmoments und nach Einschalten der Antriebe der Verteilerscheiben ein Vergleich mit dem hinterlegten Leerlaufdrehmoment bei vergleichbarer Verteilerscheibendrehzahl des eingesetzten Verteilerscheibentyps durchgeführt wird, wobei bei einer großen Differenz des gemessenen Wertes des Leerlaufdrehmoments und dem typischen Wert des Leerlaufdrehmoments der eingesetzten Verteilerscheibe in kurzem Zeitabstand später zu einer erneuten Leerlaufdrehmomentmessung aufgefordert wird, während bei einer kleinen Differenz zwischen dem gemessenen Leerlaufdrehmoment und dem typischen Leerlaufdrehmoment der eingesetzten Verteilerscheibe in einem großen Zeitabstand später zu einer erneuten Leerlaufdrehmomentmessung aufgefordert wird.

Um alle vorkommenden Fälle zu erfassen, wird in einer bevorzugten Ausführungsform der Erfindung ein typischer Wert für das Leerlaufdrehmoment für eine mögliche Verteilerscheibendrehzahl und Verteilerscheibe in einer Tabelle oder als Kennlinie im Rechner hinterlegt.

In einer weiterhin vorteilhaften Ausgestaltung der Erfindung ist vorgesehen, dass der typische Wert für das Leerlaufdrehmoment pro Verteilerscheibe in Abhängigkeit verschiedener Verteilerscheibendrehzahlen hinterlegt ist.

Im Einzelnen wird dann vorzugsweise so vorgegangen, dass bei einer großen Differenz des gemessenen Wertes des Leerlaufdrehmoments und dem typischen Wert des Leerlaufdrehmoments der eingesetzten Verteilerscheibe in kurzem Zeitabstand später zu einer erneuten Leerlaufdrehmomentmessung aufgefordert wird, während bei einer mittleren Differenz des gemessenen Leerlaufdrehmoments und des typischen Leerlaufdrehmoments der eingesetzten Verteilerscheibe in einem längeren Zeitabstand später zu einer erneuten Leerlaufdrehmomentmessung aufgefordert wird. Bei einer kleinen Differenz zwischen dem gemessenen Wert des Leerlaufdrehmoments und dem typischen Wert des Leerlaufdrehmoments der eingesetzten und eingegebenen Verteilerscheibe wird in einem großen Zeitabstand später zu einer erneuten Leerlaufdrehmomentmessung aufgefordert.

Eine Zeit zur nächsten Leerlaufmessung kann vorzugsweise in Abhängigkeit der Differenz zwischen dem gemessenen und dem typischen Leerlaufdrehmoment und einem vordefinierten Algorithmus berechnet werden.

Vorzugsweise wird die Zeit bis zur nächsten Leerlaufdrehmomentmessung in einem Bedienterminals im Rechner angezeigt. Ein Bediener kann bevorzugt auch vor der angezeigten Zeit eine Leerlaufdrehmomentmessung durchführen, beispielsweise wenn die Traktor/Streuerkombination wegen eines Nachladevorgangs angehalten wurde.

## Patentansprüche

1. Zweischeibendüngerstreuer mit einem mechanischen, hydraulischen oder elektrischen Antriebsstrang für den Antrieb der Verteilerscheiben, wenigstens einem Mittel zum Einstellen des Streuers auf verschiedene Arbeitsbreiten und Streugüter und/oder Verteilarten und einem einstellbaren Dosierorgan für jede Verteilerscheibe, das von einem rechnergesteuerten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom regelbar ist, wobei das Leerlaufdrehmoment des Antriebsstrangs bei geschlossenen Dosierschiebern und unbelasteter Verteilerscheibe und das Gesamtdrehmoment bei Belastung der Verteilerscheibe mit dem Sollmassenstrom gemessen und zur Bestimmung des durch den Düngermassenstrom bewirkten Drehmoments das Leerlaufdrehmoment vom Gesamtdrehmoment abgezogen wird, wobei ein typischer Wert für das Leerlaufdrehmoment bei einer Normdrehzahl für jeden zur Verteilung eingesetzten und in den Rechner eingegebenen Verteilerscheibentyp im Rechner hinterlegt ist, **dadurch gekennzeichnet, dass** bei der Erfassung des aktuellen Leerlaufdrehmoments und dem Einschalten des Antriebs der Verteilerscheiben ein Vergleich mit dem hinterlegten Leerlaufdrehmoment bei vergleichbarer Verteilerscheibendrehzahl des eingesetzten Verteilerscheibentyps durchgeführt wird, wobei
- bei einer großen Differenz des gemessenen Wertes des Leerlaufdrehmoments und dem typischen Wert des Leerlaufdrehmoments der eingesetzten Verteilerscheibe in kurzem Zeitabstand später, und
- bei einer kleinen Differenz zwischen dem gemessenen Leerlaufdrehmoment und dem typischen Leerlaufdrehmoment der eingesetzten Verteilerscheibe in einem großen Zeitabstand später
zu einer erneuten Leerlaufdrehmomentmessung aufgefordert wird.

2. Zweischeibendüngerstreuer nach Anspruch 1, **dadurch gekennzeichnet, dass** ein typischer Wert für das Leerlaufdrehmoment für jede mögliche Verteilerscheibendrehzahl und Verteilerscheibe in einer Tabelle oder als Kennlinie im Rechner hinterlegt ist.

3. Zweischeibendüngerstreuer nach Anspruch 1 oder 2, **dadurch gekennzeichnet, dass** der typische Wert für das Leerlaufdrehmoment pro Verteilerscheibe in Abhängigkeit verschiedener Verteilerscheibendrehzahlen hinterlegt ist.

4. Zweischeibendüngerstreuer nach einem der Ansprüche 1 bis 3, **dadurch gekennzeichnet, dass**
- bei einer großen Differenz des gemessenen Wertes des Leerlaufdrehmoments und dem typischen Wert des Leerlaufdrehmoments der eingesetzten Verteilerscheibe in kurzem Zeitabstand später,
- bei einer mittleren Differenz des gemessenen Leerlaufdrehmoments und dem typischen Leerlaufdrehmoment der eingesetzten Verteilerscheibe in einem längeren Zeitabstand später, und
- bei einer kleinen Differenz zwischen dem gemessenen Leerlaufdrehmoment und dem typischen Leerlaufdrehmoment der eingesetzten Verteilerscheibe in einem großen Zeitabstand später
zu einer erneuten Leerlaufdrehmomentmessung aufgefordert wird.

5. Zweischeibendüngerstreuer nach einem der Ansprüche 1 bis 4, **dadurch gekennzeichnet, dass** eine Zeit zur nächsten Leerlaufmessung in Abhängigkeit der Differenz zwischen dem gemessenen und dem typischen Leerlaufdrehmoment und einem vordefinierten Algorithmus berechnet wird.

6. Zweischeibendüngerstreuer nach einem der Ansprüche 1 bis 5, **dadurch gekennzeichnet, dass** eine Zeit bis zur nächsten Leerlaufdrehmomentmessung in einem Bedienterminal angezeigt wird.

7. Zweischeibendüngerstreuer nach Anspruch 6, **dadurch gekennzeichnet, dass** ein Bediener auch vor der angezeigten Zeit eine Leerlaufdrehmomentmessung durchführen kann.

## Claims

1. Two-disc fertilizer spreader having a mechanical, hydraulic or electric drive train for driving the distributor discs, at least a means for setting the spreader to various working widths and spreading material and/or distribution methods and an adjustable metering element for each distributor disc which can be controlled by a computer-controlled regulating unit, wherein the current velocity, the setpoint spreading quantity per surface area and the working width can be input into the computer and the metering element can be regulated with the setpoint mass flow calculated therefrom, wherein the idling torque of the drive train when the metering sliders are closed and the distributor disc is not loaded and the total torque when the distributor disc is loaded with the setpoint mass flow are measured, and the idling torque is subtracted from the total torque in order to determine the torque which is brought about by the fertilizer mass flow, wherein a typical value for the idling torque in the case of a standard rotational speed for each type of distributor disc which is used for distribution and is input into the computer is stored in the computer, **characterized in that** when the current idling torque is detected and the drive of the distributor discs is switched on a comparison is carried out with the stored idling torque given a comparable distributor disc rotational speed of the type of distributor disc used, wherein
- when there is a large difference between the measured value of the idling torque and the typical value of the idling torque of the distributor disc used at a short time interval later, and
- when there is a small difference between the measured idling torque and the typical idling torque of the distributor disc used at a long time interval later,
a renewed measurement of the idling torque is requested.

2. Two-disc fertilizer spreader according to Claim 1, **characterized in that** a typical value for the idling torque for each possible distributor disc rotational speed and distributor disc is stored in a table or as a characteristic curve in the computer.

3. Two-disc fertilizer spreader according to Claim 1 or 2, **characterized in that** the typical value for the idling torque per distributor disc is stored as a function of various distributor disc rotational speeds.

4. Two-disc fertilizer spreader according to one of Claims 1 to 3, **characterized in that**
- when there is a large difference between the measured value of the idling torque and the typical value of the idling torque of the distributor disc used at a short time interval later,
- when there is a medium-sized difference between the measured idling torque and the typical idling torque of the distributor disc used at a longer time interval later, and
- when there is a small difference between the measured idling torque and the typical idling torque of the distributor disc used at a long time interval later,
a renewed measurement of the idling torque is requested.

5. Two-disc fertilizer spreader according to one of Claims 1 to 4, **characterized in that** a time for the next measurement of the idling is calculated as a function of the difference between the measured idling torque and the typical idling torque, and a predefined algorithm.

6. Two-disc fertilizer spreader according to one of Claims 1 to 5, **characterized in that** a time up to the next measurement of the idling torque is displayed in an operator control terminal.

7. Two-disc fertilizer spreader according to Claim 6, **characterized in that** an operator can also carry out a measurement of the idling torque before the displayed time.

## Revendications

1. Distributeur d'engrais à double disque avec une chaîne cinématique mécanique, hydraulique ou électrique pour l'entraînement des disques de répartition, au moins un moyen de réglage de l'épandeur sur différentes largeurs de travail et produits dispersibles et/ou types de répartition et un organe de dosage réglable pour chaque disque de répartition, ledit organe étant commandé par un appareil de réglage commandé par calculateur, la vitesse de conduite actuelle, la quantité d'épandage théorique par surface et la largeur de travail étant entrées dans le calculateur et l'organe de dosage pouvant être réglé à l'aide du débit massique théorique calculé à partir de ces valeurs, le couple de rotation de marche à vide de la chaîne cinématique en présence de coulisseaux de dosage fermés et d'un disque de répartition non sollicité et le couple de rotation total étant mesurés avec le débit massique théorique en cas de sollicitation du disque de répartition et le couple de rotation de marche à vide étant soustrait au couple de rotation total pour déterminer le couple de rotation engendré par le débit massique d'engrais, une valeur typique pour le couple de rotation de marche à vide en cas de vitesse de rotation standard étant mémorisé dans le calculateur pour chaque type de disque de répartition utilisé pour la répartition et entré dans le calculateur, **caractérisé en ce qu'**en cas de détection du couple de rotation de marche à vide actuel et de connexion de l'entraînement des disques de répartition, on réalise une comparaison avec le couple de rotation de marche à vide mémorisé pour une vitesse de rotation de disque de répartition comparable du type de disque de répartition utilisé ; sachant que :
- en cas de grande différence de la valeur mesurée du couple de rotation de marche à vide et de la valeur typique du couple de rotation de marche à vide, le disque de répartition utilisé est demandé à un court intervalle de temps ultérieur ; et
- en cas de grande différence entre le couple de rotation de marche à vide mesuré et le couple de rotation de marche à vide typique, le disque de répartition utilisé est demandé à un grand intervalle de temps ultérieur ;
le tout par rapport à une nouvelle mesure de couple de rotation de marche à vide.

2. Distributeur d'engrais à double disque selon la revendication 1, **caractérisé en ce qu'**une valeur typique utilisée pour le couple de rotation de marche à vide est mémorisée dans le calculateur, dans un tableau ou sous forme de courbe caractéristique, pour chaque vitesse de rotation de disque de répartition et chaque disque de répartition possibles.

3. Distributeur d'engrais à double disque selon la revendication 1 ou 2, **caractérisé en ce que** la valeur typique utilisée pour le couple de rotation de marche à vide par disque de répartition est mémorisée en fonction de différentes vitesses de rotation de disque de répartition.

4. Distributeur d'engrais à double disque selon l'une quelconque des revendications 1 à 3, **caractérisé en ce que** :
- en cas de grande différence de la valeur mesurée du couple de rotation de marche à vide et de la valeur typique du couple de rotation de marche à vide, le disque de répartition utilisé est demandé à un court intervalle de temps ultérieur ;
- en cas de différence moyenne du couple de rotation de marche à vide mesuré et du couple de rotation de marche à vide typique, le disque de répartition utilisé est demandé à un Intervalle de temps ultérieur plus long ;
- en cas de grande différence entre le couple de rotation de marche à vide mesuré et le couple de rotation de marche à vide typique, le disque de répartition utilisé est demandé à un grand intervalle de temps ultérieur ;
le tout par rapport à une nouvelle mesure de couple de rotation de marche à vide.

5. Distributeur d'engrais à double disque selon l'une quelconque des revendications 1 à 4, **caractérisé en ce que** le moment de la mesure de marche à vide suivante est calculé en fonction de la différence entre le couple de rotation de marche à vide mesuré et typique et un algorithme prédéfini.

6. Distributeur d'engrais à double disque selon l'une quelconque des revendications 1 à 5, **caractérisé en ce que** le moment jusqu'à la mesure de couple de rotation de marche à vide suivante est affiché dans un terminal de commande.

7. Distributeur d'engrais à double disque selon la revendication 6, **caractérisé en ce qu'**un utilisateur peut également réaliser une mesure de couple de rotation de marche à vide avant l'instant affiché.
